# EUROPÄISCHE PATENTANMELDUNG

(11) **EP 1 353 114 A2**
(43) Veröffentlichungstag der Anmeldung: **15.10.2003**
(21) Anmeldenummer: 03006549.4
(22) Anmeldetag: 24.03.2003
(51) Int. Cl.: F17C 13/04

(54) **Umfüllschlauch**

(30) Priorität: 03.04.2002 DE 10214667
(71) Anmelder: MESSER GRIESHEIM GmbH, 65933 Frankfurt am Main (DE)
(72) Erfinder: Krüll, Joachim, 47138 Duisburg (DE); Henrich, Helmut, 50259 Pulheim (DE)

(57) **Zusammenfassung**

Die Erfindung betrifft einen Umfüllschlauch für gasförmige, flüssige und feste Medien, insbesondere für kryogene Flüssigkeiten, bestehend aus einem Förderschlauch (2), der mit einer, mindestens eine Absperrvorrichtung (4) aufweisenden Gasableitung (5) verbunden ist. Erfindungsgemäß wird dadurch, dass in dem Förderschlauch (2) ein mit der Gasableitung (5) verbundener Abgasschlauch (3) angeordnet ist, ein in der Herstellung kostengünstiger, manuell leicht handhabbarer und vielseitig einsetzbarer Umfüllschlauch zur Verfügung gestellt.

## Beschreibung

Die Erfindung betrifft einen Umfüllschlauch für gasförmige, flüssige und feste Medien, insbesondere für kryogene Flüssigkeiten, nach den Merkmalen des Oberbegriffs von Anspruch 1.

Derartige, aus einem flüssigkeits- und gasresistenten Kunststoff, Gummi oder Metall bestehenden Umfüllschläuche weisen einen, das umzufüllende Medium leitenden und mit herkömmlichen Absperrvorrichtungen (Ventile) und Verbindungselementen (Kupplungen) ausgerüsteten sowie mit einer Gasableitung verbundenen Förderschlauch auf.

Zum Umfüllen von kryogenen Flüssigkeiten muss das Umfüllequipment vor dem Umfüllvorgang zur Gewährleistung der Produktreinheit des Umfüllmediums und zur Betriebssicherheit des Umfüllsystems von der Umgebungsluft gereinigt und zur Reduzierung der Abdampfverluste, auf das Temperaturniveau des kryogenen Umfüllmediums abgekühlt werden.

Zum dafür notwendigen Kaltfahren des Umfüllsystems wird der Umfüllschlauch mit dem kryogenen Umfüllmedium beaufschlagt.

Die den Förderschlauch und dessen Absperrvorrichtungen und Verbindungselemente beim Durchströmen auf Eigentemperatur abkühlende und dabei verdampfende Flüssigkeit wird als Abgas über die mit dem Förderschlauch verbundene und mindestens auch eine Absperrvorrichtung (Ventil) aufweisende, als "Gas-Return-Leitung" bezeichnete Gasableitung, beispielsweise ein an dem Förderschlauch angeschweißtes Rohrstück, aus dem Umfüllsystem abgeführt.

Nach Erreichen des der Temperatur des kryogenen Umfüllmediums entsprechenden Temperaturniveaus in dem Umfüllsystem wird die in der Regel als Ventil ausgebildete Absperrvorrichtung der Gasableitung geschlossen.

Nunmehr kann das kryogene Medium mittels des an einem das kryogene Medium enthaltenen Speicherbehälter und an die mit dem kryogenen Medium zu befüllende Einrichtung angeschlossenen Umfüllschlauchs umgefüllt werden.

Ein derartiger Umfüllschlauch mit einer an der Schlauchaußenseite angeordneten Gasableitung, ist kostenaufwendig in der Herstellung und manuell schwer bzw. nur mit maschineller Hilfe handhabbar.

Der Erfindung liegt die Aufgabenstellung zugrunde, einen gattungsgleichen Umfüllschlauch zur Verfügung zu stellen, der kostengünstig in der Herstellung und leicht und sicher manuell handhabbar ist.

Die Aufgabe wird erfindungsgemäß durch einen Umfüllschlauch mit den Merkmalen von Anspruch 1 gelöst.

Vorteilhafte Ausführungsformen des Erfindungsgegenstandes sind den Unteransprüchen zu entnehmen.

Der erfindungsgemäße Umfüllschlauch mit einem in dem Förderschlauch angeordneten und mit der an dem Förderschlauch angeordneten Gasableitung verbundenen Abgasschlauch, weist folgende wesentliche Vorteile gegenüber einen herkömmlichen Umfüllschlauch auf:
- vereinfachte, kostengünstige Herstellung
- einfache, kostengünstige nachträgliche Wärmeisolation
- leichte manuelle Handhabbarkeit
- verringerte Abdampfverluste infolge geringerer Schlauchmasse.

Der in dem Förderschlauch des Umfüllschlauchs zu Aufnahme und Weiterleitung des in dem Förderschlauch anfallenden Abgases angeordnete und zur Abführung des Abgases aus dem Förderschlauch mit einer an dem Förderschlauch angeordneten und mit mindestens einer Absperrvorrichtung (Ventil) ausgerüsteten Gasableitung verbundene Abgasschlauch kann aus unterschiedlichem Material verschiedener Form und unterschiedlicher Wandstärke bestehen.

Vorteilhaft weist das in einem relativ große Differenzdrücke aufweisenden Einströmbereich des Förderschlauchs angeordnete Abgasschlauchstück eine größere Wandstärke als das in einem geringere Differenzdrücke aufweisenden Ausströmbereich des Förderschlauchs angeordnete Abgasschlauchstück auf.

Der aus einem flüssigkeits- und gasresistentem Kunststoff, Gummi oder Metall bestehende Förderschlauch und Abgasschlauch ist in seiner Dimensionierung und Ausbildung den jeweils herrschenden Verfahrensbedingungen (Art des Füllmediums, Füllmenge, -druck, -temperatur etc.) angepasst.

So kann der in dem Förderschlauch angeordnete, beispielsweise aus einem Metallwickelschlauch bestehende Abgasschlauch auch gasdurchlässig ausgebildet sein.

Der erfindungsgemäße, besonders vorteilhaft für kryogene Flüssigkeiten einsetzbare Umfüllschlauch, ist auch zum Umfüllen von gasförmigen oder festen Medien geeignet.

Vorteilhaft kann der erfindungsgemäße Umfüllschlauch auch zum Warmfahren eines Umfüllsystems, insbesondere auch zum Erwärmen eines Umfüllsystems für nur durch Anwärmung umfüllbare, zähfließende Medien, wie beispielsweise Teer, Schweröl u. dergl., Verwendung finden.

Dazu wird als Heizgas erwärmtes Fördermedium oder ein kostengünstiges Heizgas, wie beispielsweise Heißdampf, über das in dem Einströmbereich des Förderschlauchs angeordnete Ventil dem Förderschlauch zugeführt.

Nach dem Erwärmen des Förderschlauchs und dessen Absperrvorrichtung (Ventil) sowie des Verbindungselementes (Kupplung) auf die Temperatur des Heizmediums wird das abgekühlte Heizgas über das geöffnete Ventil der an dem Förderschlauch angeordneten und mit dem Abgasschlauch verbundenen Gasableitung aus dem Umfüllschlauch abgeführt.

Beim Einsatz des erfindungsgemäßen Umfüllschlauchs zum Umfüllen von brennbaren kryogenen Medien, wie beispielsweise von Flüssigwasserstoff, muss der Umfüllschlauch aus sicherheitstechnischen Gründen (Explosionsgefahr) vor und nach jedem Abfüllvorgang mit Inertgas gespült werden.

Dazu wird Inertgas über das in den Strömungseingangsbereich des Förderschlauchs angeordnete Ventil dem strömungsausgangsseitig durch eine Kupplung verschlossenen Förderschlauch zugeführt.

Nach Beendigung des Spülens des Umfüllschlauchs und dessen Regelvorrichtungen (Ventil/e) sowie Verbindungselemen/e (Kupplung/en) wird das gasförmige Spülmedium durch den Abgasschlauch über das geöffnete Ventil der an dem Umfüllschlauch angeordneten und mit dem Förderschlauch verbundenen Gasableitung aus dem Umfüllschlauch abgeführt.

Nachfolgend wird die Erfindung anhand eines in der Zeichnung dargestellten Ausführungsbeispiels näher erläutert.

Es zeigt:
**Fig. 1** eine schematische Darstellung eines Umfüllsystems für kryogene Flüssigkeiten mit einem erfindungsgemäßen Umfüllschlauch;
**Fig. 2** eine schematische Darstellung eines Umfüllsystems mit einem einen Förderschlauch unterschiedlicher Wandstärke aufweisenden Umfüllschlauch;
**Fig. 3** eine schematische Darstellung eines Umfüllsystems für kryogene Flüssigkeiten mit einem mit einer Wärmeisolation versehenen und einen Förderschlauch unterschiedlicher Wandstärke aufweisenden Umfüllschlauch.

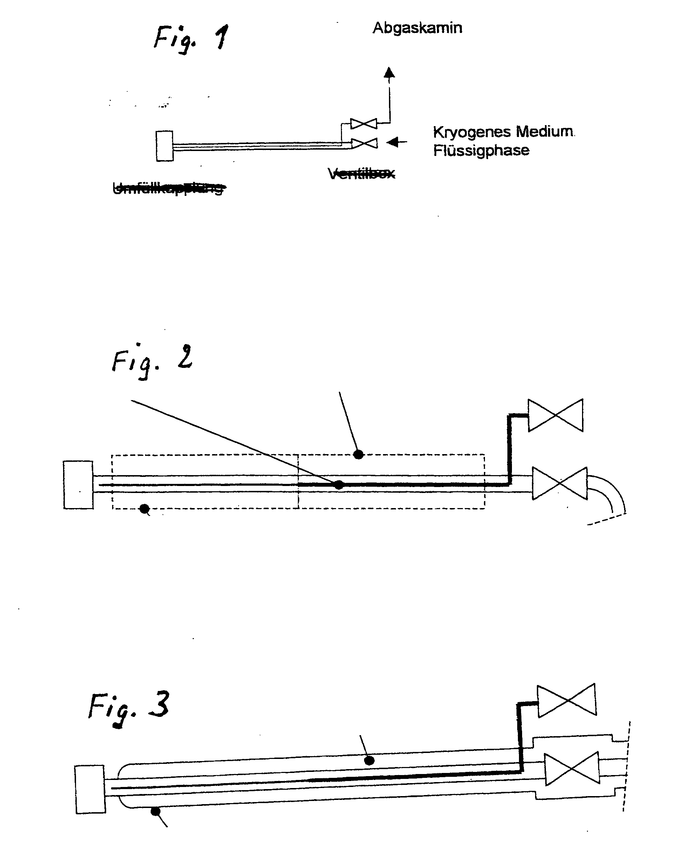

Den **Fig. 1 - 3** ist ein Umfüllsystem für kryogene Flüssigkeiten mit einem Umfüllschlauch 1 zu entnehmen, in dessen den Medienstrom leitenden Förderschlauch 2 ein Abgasschlauch 3 mit Gasableitung 5 angeordnet ist. Der in dem Förderschlauch 2 angeordnete, auch als "Gas-Return-Leitung" bezeichnete Abgasschlauch 3 ist so mit der an dem Förderschlauch 2 befestigten und mit einem Ventil 4 ausgerüsteten Gasableitung 5 verbunden, dass ein in dem Förderschlauch 2 durch Verdampfung aus kryogener Flüssigkeit in dem Förderschlauch 2 erzeugtes Abgas aus dem Umfüllschlauch 1 problemlos abgeführt werden kann.
Üblicherweise ist die, mit einem herkömmlichen Schlauchanschlussteil ausgerüstete, aus einem Gas resistentem Rohrstück bestehende Gasableitung 5 an den Förderschlauch 2 angeschweißt.
Zum Kaltfahren des Umfüllsystems wird die zur Abkühlung erforderliche Menge an kryogenen Umfüllmedium, beispielsweise Flüssigwasserstoff, durch ein strömungseingangsseitig an dem Förderschlauch 2 angeordnetes Ventil 6 in den strömungsausgangsseitig mit einer Kupplung 7 versehenen Förderschlauch 2 des Umfüllschlauchs 1 eingebracht.
Das beim Durchströmen des Umfüllschlauchs 1 den Förderschlauch 2 und die geschlossene Kupplung 7 auf Eigentemperatur abkühlende und dabei verdampfende kryogene Medium wird als gasförmiges Medium (Abgas) über den Abgasschlauch 3 durch das geöffnete Ventil 4 der Gasableitung 5 aus dem Umfüllschlauch 1 abgeführt.
Wie in Fig. 2 und 3 dargestellt, weist der in dem Förderschlauch 2 angeordnete und mit der Gasableitung 5 verbundene Abgasschlauch 3 Schlauchstücke 3a, b unterschiedlicher Wandstärke auf.
Gemäß Fig. 2 weist das in einem durch relativ große Differenzdrücke zwischen dem Abgasschlauch 3 und dem Förderschlauch 2 gekennzeichneten Bereich 8 angeordnete Schlauchstück 3a eine größere Wandstärke als das in einem durch geringere Differenzdrücke zwischen dem Abgasschlauch 3 und dem Förderschlauch 2 gekennzeichneten Bereich 9 angeordnete Schlauchstück 3b auf.

Der in variabler Form und Länge ausgebildete Förderschlauch 2 mit dem in seinem Schlauchinneren angeordneten und mit der Gasableitung 4 verbundenen Abgasschlauch 3 kann aus einem kostengünstigen, flüssigkeits- und gasresistentem Material, z.B. aus einem Metallwickelschlauch, bestehen.

Zur Verbesserung der Gasaufnahme in dem Förderschlauch 2 kann der Abgasschlauch 3 auch gasdurchlässig ausgeführt sein.
Gemäß Fig. 3 kann der aus einem flüssigkeitsresistentem Kunststoff, Gummi oder Metall bestehende, den Abgasschlauch 3 enthaltene Umfüllschlauch 1 eine Wärmeisolation 10, beispielsweise in Form einer Vakuumisolation, aufweisen.
Die Einsatzmöglichkeiten des mit einem Inliner-Abgasschlauch 3 ausgerüsteten Umfüllschlauchs 1 sind vielfältig.
Beispielsweise kann der erfindungsgemäße Umfüllschlauch 1 auch zum Warmfahren eines Umfüllsystem Verwendung finden.
Dazu wird als Heizmedium erwärmtes Fördermedium oder ein kostengünstiges Heizmedium, wie z.B. Heißdampf, über das strömungseingangsseitig an dem Förderschlauch 2 angeordnete Ventil 6 dem strömungsausgangsseitig die geschlossene Kupplung 7 aufweisenden Förderschlauch 2 zugeführt.
Das beim Durchströmen des Umfüllschlauchs 1 den Förderschlauch 2 und die geschlossene Kupplung 7 auf Eigentemperatur erwärmende Heizmedium wird über den in dem Förderschlauch 2 angeordneten Abgasschlauch 3 über das geöffnete Ventil 4 der mit dem Abgasschlauch 3 verbundenen Gasableitung 5 aus dem Förderschlauch 2 des Umfüllschlauchs 1 abgeführt.
Zur Verwendung des erfindungsgemäßen Umfüllschlauchs 1 zum Umfüllen von brennbaren Medien, wie beispielsweise Flüssigwasserstoff, muss der Umfüllschlauch 1 vor und nach jedem Umfüllvorgang mit einem Inertgas, wie beispielsweise Helium, gespült werden.
Dazu wird das Spülgas über das strömungseingangsseitig an dem Förderschlauch 2 angeordnete Ventil 6 dem strömungsausgangsseitigen Ventil 4 zugeführt, wobei das Spülgas den gesamten Förderschlauch 2 über den Abgasschlauch 3 bis zur Kupplung 7 spült. Nach Beendigung des Spülen des Förderschlauchs 3, des Ventils 6 und der Kupplung 7 wird das Spülmedium durch den Abgasschlauch 3 über das geöffnete Ventil 4 der an dem Umfüllschlauch 1 angeordneten und mit dem Abgasschlauch 3 verbundenen Gasableitung 5 aus dem Förderschlauch 2 des Umfüllschlauchs 1 abgeführt.

Die Beschaffenheit, Dimensionierung und Ausbildung des erfindungsgemäßen Umfüllschlauchs 1 für kryogene Medien ist den spezifischen Verfahrensbedingungen, wie beispielsweise Art des Umfüllmediums, der Umfüllmengen, -temperaturen und -drücken, angepasst.

### Bezugszeichenaufstellung

- 1: Umfüllschlauch
- 2: Förderschlauch
- 3: Abgasschlauch
- 4: Ventil
- 5: Gasableitung (Rohrstück)
- 6: Ventil
- 7: Kupplung
- 8: Differenzdruckbereich
- 9: Differenzdruckbereich
- 10: Wärmeisolation

## Patentansprüche

1. Umfüllschlauch für gasförmige, flüssige und feste Medien, insbesondere für kryogene Flüssigkeiten, bestehend aus einem Förderschlauch (2), der mit einer, mindestens eine Absperrvorrichtung (4) aufweisenden Gasableitung (5) verbunden ist, **dadurch gekennzeichnet, daß** in dem Förderschlauch (2) ein mit der Gasableitung (5) verbundener Abgasschlauch (3) angeordnet ist.

2. Umfüllschlauch nach Anspruch 1, **dadurch gekennzeichnet, daß** der Abgasschlauch (3) eine gleichbleibende Wandstärke aufweist.

3. Umfüllschlauch nach Anspruch 1, **dadurch gekennzeichnet, daß** der Abgasschlauch (3) aus Schlauchstücken (3a, 3b) unterschiedlicher Wandstärke besteht.

4. Umfüllschlauch nach einem der Ansprüche 1 bis 3, **dadurch gekennzeichnet, daß** der Abgasschlauch (3) gasdurchlässig ausgebildet ist.

5. Umfüllschlauch nach einem der Ansprüche 1 bis 4, **dadurch gekennzeichnet, daß** der Förderschlauch (2) und der Abgasschlauch (3) aus einem flüssigkeits- und gasresistentem Material bestehen.

6. Umfüllschlauch nach einem der Ansprüche 1 bis 5, **dadurch gekennzeichnet, daß** der Umfüllschlauch (1) mit einer Wärmeisolation (10) versehen ist.

7. Verwendung des Umfüllschlauchs (1) zum Kaltfahren eines Umfüllsystems für kryogene Medien.

8. Verwendung des Umfüllschlauchs (1) zum Warmfahren eines Umfüllsystems für kryogene Medien.

9. Verwendung des Umfüllschlauchs (1) zum Erwärmen eines Umfüllsystems für nur durch Anwärmung fließfähige, zähfließende Medien.

10. Verwendung des Umfüllschlauchs (1) zum Inertisieren eines Umfüllsystems für brennbare Medien.
